Europäisches Patentamt

European Patent Office

Office européen des brevets

(19)

(11) **EP 0 861 015 A2**

(12) **EUROPÄISCHE PATENTANMELDUNG**

(43) Veröffentlichungstag:
26.08.1998 Patentblatt 1998/35

(51) Int. Cl.⁶: **H05B 6/12**

(21) Anmeldenummer: 98101786.6

(22) Anmeldetag: 03.02.1998

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: 22.02.1997 DE 19707159

(71) Anmelder: **Diehl Stiftung & Co.**
**90478 Nürnberg (DE)**

(72) Erfinder:
**vom Schloss, Edgar, Dipl.-Ing.**
**90574 Rosstal (DE)**

(74) Vertreter:
**Hofmann, Gerhard, Dipl.-Ing.**
**Patentassessor et al**
**c/o Diehl Stiftung & Co.,**
**Stephanstrasse 49**
**90478 Nürnberg (DE)**

(54) **Einrichtung zum induktiven Beheizen von Behältern**

(57) Es wird eine Einrichtung zum induktiven Beheizen von Behältern unterschiedlicher Größe mit Hilfe von zumindest zwei Induktionsspulen (3,4;21,22) vorgeschlagen, die in einem elektrischen Schwingkreis (1,20) eingebaut sind. In dem Schwingkreis befindet sich ein Schaltelement (7) mit in Serie geschalteten Transistoren (11,12) und in Serie zu den Induktionsspulen (3,4;21,22) angeordnete Kondensatoren (8,9,10).

Durch Zuschalten eines Kondensators und Kurzschluß der zusätzlichen Induktionsspule ist der Betrieb einer normalen Kochfläche möglich. Durch Abschalten des gleichen Kondensators und Öffnen des Kurzschlusses der zusätzlichen Spule wird der Betrieb der zusätzlichen Spule bei gleicher Resonanzfrequenz und somit bei gleicher Leistung geschaffen.

Fig. 1

EP 0 861 015 A2

## Beschreibung

Die Erfindung betrifft eine Einrichtung zum induktiven Beheizen von Behältern nach dem Oberbegriff des Patentanspruches 1.

Durch die DE 41 42 872 A1 sind ein Verfahren und eine Vorrichtung zum induktiven Beheizen von Behältern unterschiedlicher Größe offenbart. Nach diesem bekannten Verfahren werden mehrere Induktionselemente konzentrisch angeordnet. Aufgrund von ihnen zugeführten Signalen, die auf die Induktivität der einzelnen Induktionselemente schließen läßt, wird auf die Größe des verwendeten Behälters geschlossen. Dabei werden immer nur diejenigen Induktionselemente mit elektrischer Leistung betrieben, die für das Erwärmen des verwendeten Topfes bzw. Behälters notwendig sind. Im Falle der Zweikreiszuschaltung ändert sich bei diesem bekannten Verfahren die Resonanzfrequenz, wodurch sich auch die Leistungsabgabe ändert. Die Leistungsabgabe kann aber nur durch Frequenzanpassung konstant gehalten werden. Bei dem bekannten Verfahren wird von zwei in Serie schaltbaren Induktivitäten mit fester Schwingkreiskapazität ausgegangen. Dies hat den Nachteil, daß mit einer Spule oder mit zwei Spulen jeweils die Frequenz angepaßt werden muß, um eine gleiche Leistungsabgabe zu erzielen.

Es ist Aufgabe der Erfindung, bei einer induktiv beheizten Kochfläche eine Zweikreiszuschaltung bei gleichbleibender Resonanzfrequenz zu ermöglichen, um eine Anpassung an verschiedene Topfformen vornehmen zu können.

Diese Aufgabe ist erfindungsgemäß durch die Merkmale des Patentanspruches gelöst. Vorteilhafte Ausgestaltungen und Weiterbildungen der Erfindung sind in den Unteransprüchen beschrieben.

Bei Strahlungsheizkörpern ist die Zweikreiszuschaltung bereits üblich, wenn eine Anpassung an verschiedene Topfformen vorgenommen werden soll. Eine derartige Anpassung war bisher bei induktiv beheizten Kochplatten bzw. Kochflächen nicht möglich, weil in den entsprechenden Schaltungen immer mit einem festen Schwingkreis gearbeitet wurde. Erst durch die erfindungsgemäße Einrichtung durch Zuschalten eines Kondensators und Kurzschluß der zweiten Spule ist der Betrieb einer normalen Kochstelle möglich. Durch das Abschalten des Kondensators und das gleichzeitige Öffnen des Spulenkurzschlusses ist dann der Betrieb einer zusätzlichen Spule, beispielsweise für einen Bräter oder einen Zweikreis, bei gleicher Resonanzfrequenz möglich. Dies bedeutet eine fester Leistungsabgabe, welche bei gleichbleibender Resonanzfrequenz erreicht wird, wobei mit Resonanzfrequenz immer die Schwingkreisfrequenz gemeint ist. Die Abgabeleistung hängt direkt, nämlich umgekehrt proportional, mit der Induktivität zusammen. Das bedeutet, daß bei Zuschaltung nur einer zusätzlichen Spule die Leistung sinkt, während durch Verringern der Schwingkreiskapazität die Resonanzfrequenz konstant gehalten werden kann. Durch die erfindungsgemäße Schaltungsanordnung ergeben sich in vorteilhafter Weise besser definierte Arbeitsbedingungen für den Anwender. So wird oberhalb der akustisch wahrnehmbaren Frequenzen, aber noch unter der max. Arbeitsfrequenz der Steuerelemente, nämlich um etwa 25 kHz gearbeitet. Ferner wird die Leistungsanpassung durch die geringe Ansteuerfrequenz-Variation wesentlich vereinfacht. Und schließlich sind bei gleicher Ansteuerfrequenz gezielte Leistungsveränderungen durch Variation des LC-Kreises möglich.

In gleicher Weise kann durch entsprechende Abstimmung von Induktivität der Spule und Kapazität der Schwingkreiskondensatoren eine höhere Leistung bei einem Bräter- oder Zweikreisbetrieb erzielt werden.

In der Zeichnung sind Beispiele der Erfindung dargestellt. Darin zeigen:

Figur 1    die Schaltungsanordnung von Induktionsmitteln für eine Bräterzuschaltung,

Figur 2    eine Schaltungsanordnung von Induktionsmitteln für eine Zweikreiszuschaltung.

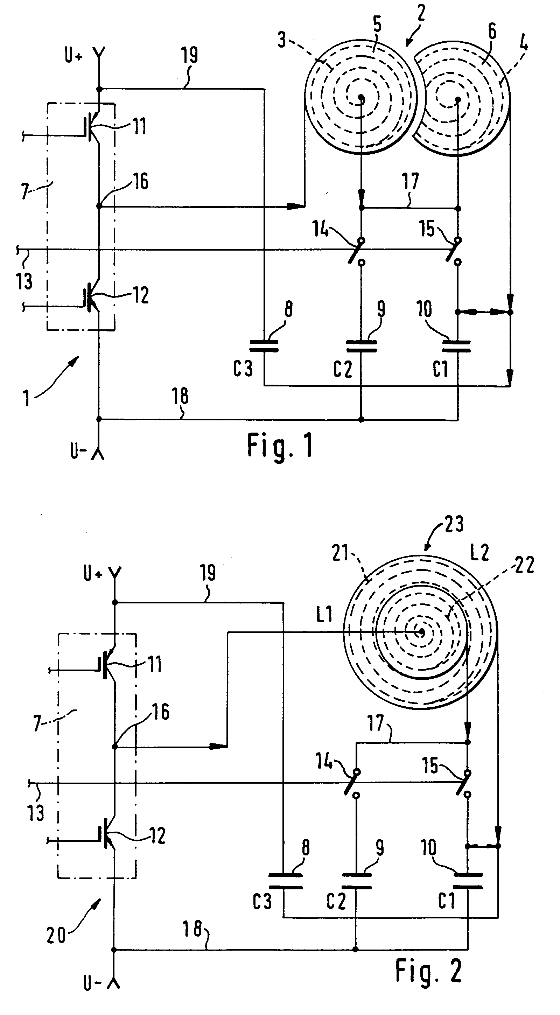

In Figur 1 ist schematisch ein Beispiel einer elektrischen Schaltung 1 eines Kochfeldes bzw. einer Kochfläche 2 dargestellt, die in Figur 1 eine sogenannte Bräterzuschaltung ist. Ein zentrales Element einer solchen induktiv beheizten Kochfläche 2 ist eine Induktionsspule, durch die eine elektrische Energie in einem Kochgefäß oder Behälter induziert wird, wo sie in Wärmeenergie umgewandelt wird. Im Falle der in Figur 1 gezeigten Bräterzuschaltung befindet sich eine erste Spule 3 in dem Kochfeld 5 und eine zweite Spule 4 in dem zweiten Kochfeld 6, welches die eigentliche Bräterzuschaltung darstellt. Die Induktionsspulen 3 und 4 sind in einen elektrischen Schwingkreis 1 eingebaut, der die drei Kondensatoren 8, 9 und 10 und ein Schaltelement 7 aufweist. Das Schaltelement 7 besteht aus zwei in Serie geschalteten Transistoren 11 und 12. Die Induktionsspulen 3 und 4 liegen zwischen den beiden Transistoren 11 und 12. Die Induktionsspulen 3 und 4 stehen mit einer Bräterzuschaltung 13 in Verbindung, die aus zwei miteinander gekoppelten Schaltelementen 14 und 15 gebildet ist. Diese Schaltelemente 14 und 15 können Relais oder elektronische Schalter sein. Der gesamte elektrische Schwingkreis 1 liegt an einer mit U+ und U-bezeichneten Spannungsquelle an.

In der in Figur 1 gezeichneten Schalterstellung ist die Bräterzuschaltung mit den Schaltelementen 14 und 15 geöffnet. Diese geöffnete Schalterstellung bedeutet, daß der Kondensator 9 von der Spule 3 abgeschaltet ist, während gleichzeitig der Kurzschluß der Spule 4 geöffnet ist. Durch diese Schalterstellung ist demzufolge der Betrieb der zusätzlichen Spule 4 für den Bräter bei gleicher Resonanzfrequenz und somit bei gleicher Leistung möglich.

Der Energiefluß verläuft vom Anschlußpunkt 16 im Schaltelement 7 zur ersten Spule 3 im Kochfeld 5 und wird durch die Leitung 17 in die zweite Spule 4 des Bräters 6 eingeleitet. Die zweite Spule 4 ist durch die Leitungen 18 und 19 an die Transistoren 11 und 12 im Schaltelement 7 angeschlossen. Dabei ist wesentlich, daß in den Leitungen 18 und 19 die Kondensatoren 10 und 8 eingebaut sind.

Durch Fließen der Schalter 14 und 15 mittels der Bräterzuschaltung 13 wird die zweite Spule 4 im Bräter 6 kurzgeschlossen. Gleichzeitig wird dadurch der Kondensator 9 zur Leitung 18 zugeschaltet, während in der zweiten Leitung 19 wiederum der Kondensator 8 eingesetzt ist.

Durch eine entsprechende Abstimmung der Induktivitäten der Spulen und der Kapazitäten der Kondensatoren in dem elektrischen Schwingkreis können höhere Leistungen bei Bräter- und auch bei einem Zweikreisbetrieb erreicht werden.

Ein wesentliches Merkmal der elektrischen Schaltung liegt darin, daß immer von einer gleichbleibenden Leistungsabgabe ausgegangen wird. Dies ist wichtig, weil der Bedienungsperson in den entsprechenden technischen Unterlagen zu dem Kochgerät immer eine definierte Leistung für jede Kochfläche angeboten wird. Diese definierte Leistung wird sowohl bei kleiner Kochstelle bzw. einem kleinen Kochfeld als auch bei einer Zweikreiszuschaltung konstant gehalten.

In Figur 2 ist schematisch das Beispiel einer elektrischen Zweikreiszuschaltung 20 dargestellt. Darin sind für gleiche Bauelemente die gleichen Bezugszeichen wie in Figur 1 eingesetzt worden. Die dargestellte Schaltung nach Figur 2 zeigt durch die Zweikreiszuschaltung 13 geöffnete Schaltelemente 14 und 15. Dies bedeutet, daß die innere Spule 22 mit der äußeren Spule 21 des Kochfeldes 23 in Serie geschaltet ist. Der Energiefluß verläuft demnach ausgehend vom Anschlußpunkt im Schaltelement 7 zur inneren Spule 22 zur zugeschalteten Spule 21. Die äußere Spule 21 ist durch die Leitungen 18 und 19 mit den Transistoren 11 und 12 des Schaltelementes 7 verbunden, wobei in den Leitungen 18 und 19 wiederum die Kondensatoren 10 und 8 zur Wirkung kommen.

Bei Schließen der Schaltelemente 14 und 15 wird die zweite Spule 21 kurzgeschlossen, so daß die erste Spule 22 durch die Leitungsverbindung 17 und 18 mit eingesetztem Kondensator 9 an den Transistor 12 einerseits und durch die Leitungsverbindung 19 mit dem Kondensator 8 an dem Transistor 11 des Schaltelementes 7 angeschlossen ist. Auch hier gilt wieder, wie schon zu Figur 1 ausgeführt, daß durch das Abschalten eines Kondensators und das Öffnen des Kurzschlusses der Spulen der Betrieb einer zusätzlichen Spule bei gleicher Resonanzfrequenz und somit bei gleicher Leistung möglich ist.

Diese gleiche Resonanzfrequenz und auch die gleiche Leistung ergeben sich aus den nachfolgenden Beziehungen. Die Frequenz f für die Anzahl von vollen Schwingungen während einer geeigneten Zeiteinheit wird allgemein ausgedrückt durch:

$$f = \frac{1}{2 \times \pi \times \sqrt{L \times C}}.$$

Die Einheit der Frequenz f ist das Hertz (Hz). Aus der Leistungsgleichheit nach der Beziehung

$$(C_{10} + C_9) \times L_{21} = C_{10} \times (L_{21} + L_{22})$$

folgt, daß gemäß den nachfolgend wiedergegeben Beziehungen die Resonanzfrequenz für die normale Platte und auch die Resonanzfrequenz für die Bräterzuschaltung bzw. für die Zweikreiszuschaltung gleich sind. Dabei sei die Resonanfrequenz für die normale Platte mit $f_1$ und die Resonanzfrequenz für die Bräterzuschaltung mit $f_2$ bezeichnet.

$$f_1 = \frac{1}{2 \pi \sqrt{(C_{10} + C_9) L_{21}}}$$

$$f_2 = \frac{1}{2 \pi \sqrt{C_{10}(L_{21} + L_{22})}}$$

Aus den obigen Beziehungen ergibt sich ein Wert für den Änderungskondensator

$$C_{10} = \frac{L_{21}(C_{10} + C_9)}{L_{21} + L_{22}}.$$

Die Schaltungsanordnungen ergeben, daß aus einer gleichen Ansteuerfrequenz eine verminderte Abgabeleistung resultiert. Bereits durch eine geringe Variation der Ansteuerfrequenz kann folglich die Leistung dem System angepaßt werden. Dabei ist bemerkenswert, daß nicht ein sogenannter freischwingender LC-Kreis vorhanden ist, sondern daß dem System eine Frequenz aufgezwungen wird. Diese erzwungene Frequenz des μ-Prozessors liegt oberhalt der Resonanzfrequenz des LC-Kreises. Die Leistung wird durch Annähern oder Entfernen der Ansteuerfrequenz zur Resonanzfrequenz erreicht. Die Ansteuerfrequenz vom μ-Prozessor ändert sich daher nur in sehr geringem Maße.

**Patentansprüche**

1. Einrichtung zum induktiven Beheizen von Behältern unterschiedlicher Größe mit Hilfe von zumindest zwei Induktionsspulen, die wahlweise konzentrisch oder nebeneinanderliegend angeordnet und in einem elektrischen Schwingkreis eingebaut sind, der ein Schaltelement aus in Serie geschalteten Schaltern (Transistoren) und in Serie zu den Induktionsspulen angeorndete Kondensatoren aufweist,
dadurch gekennzeichnet,
daß eine Zuschalteinrichtung (13) vorgesehen ist, durch welche in der ersten Betriebsstellung eine der Induktionsspulen (4,3;22,21) kurzgeschlossen wird bei gleichzeitiger Zuschaltung eines Kondensators (9) zur anderen Induktionsspule, und durch welche in der zweiten Betriebsstellung die Induktionsspulen (3,4;21,22) in Serie geschlossen sind bei gleichzeitigem Abschalten des in der ersten Betriebsstellung zugeschalteten Kondensators (9).

2. Einrichtung nach Anspruch 1,
dadurch gekennzeichnet,
daß die Zuschalteinrichtung (13) zwei Schaltelemente (14,15) miteinander koppelt, von denen ein Schaltelement (14) den Kondensator (9) entsprechend der Schalterstellung zu- oder abschaltet, während das zweite Schaltelement (15) die Induktionsspule (21,4) entsprechend der Schalterstellung kurzschließt oder in Serie zur ersten Induktionsspule (3,22) schaltet.

3. Einrichtung nach Anspruch 1 oder 2,
dadurch gekennzeichnet,
daß die Schaltelemente (14,15) als Relais, elektronische Schalter oder dergleich ausgebildet sind.

4. Einrichtung nach Anspruch 1, 2 oder 3,
dadurch gekennzeichnet,
daß die Resonanzfrequenz für die einzelne Kochfläche (2,23) und für die Kochfläche (2,23) mit zugeschalteter Induktionsspule gleich ist entsprechend der Beziehung für die Leistungsgleichheit

$$(C_{10} + C_9) \times L_{21,3} = C_{10} (L_{21,3} + L_{22,4})$$

worin C für die Kondensatoren (9,10) und L für die Induktionsspulen (3,4;21,22) steht.

Fig. 1

Fig. 2